(19) Europäisches Patentamt / European Patent Office / Office européen des brevets

(11) **EP 2 441 936 A1**

(12) **DEMANDE DE BREVET EUROPEEN**

(43) Date de publication:
**18.04.2012 Bulletin 2012/16**

(51) Int Cl.:
***F02C 3/30*** (2006.01)

(21) Numéro de dépôt: **10187276.0**

(22) Date de dépôt: **12.10.2010**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **GE Energy Products France SNC 90000 Belfort (FR)**

(72) Inventeur: **Ginestous, Hervé 90000, Belfort (FR)**

(74) Mandataire: **Gauer, Pierre et al Feray Lenne Conseil Le Centralis 63, avenue du Général Leclerc 92340 Bourg-la-Reine (FR)**

Remarques:
Revendications modifiées conformément à la règle 137(2) CBE.

(54) **Turbine à gaz avec contrôle d'injection d'eau**

(57)     L'invention a pour objet une turbine à gaz, apte à entraîner en rotation un rotor à partir de l'énergie produite par la combustion d'un combustible dans une chambre de combustion de ladite turbine, la turbine comprenant :
- des moyens d'injection de combustible dans la chambre de combustion,
- des moyens d'injection d'eau dans la chambre de combustion,
caractérisée en ce que la turbine comprend en outre des moyens de commande aptes à agir sur les moyens d'injection de combustible de manière à ce que la quantité de combustible présente dans la chambre de combustion lors d'une injection d'eau soit :
a) supérieure à une valeur minimale prédéterminée, de manière à maintenir une flamme de combustion dans la chambre de combustion, et
b) inférieure à une valeur maximale prédéterminée, de manière à ce que la vitesse de rotation du rotor soit inférieure à une vitesse maximale prédéterminée.

Fig. 4

EP 2 441 936 A1

**Description**

La présente invention a pour objet une turbine à gaz apte à entraîner en rotation un rotor à partir de l'énergie produite dans une chambre de combustion de ladite turbine, la turbine comprenant en outre un système d'injection d'eau relié à la chambre de combustion. Elle a également pour objet un dispositif de production d'électricité comprenant cette turbine.

Une turbine à gaz est une machine tournante thermodynamique appartenant à la famille des moteurs à combustion interne et dont le rôle est de produire de l'énergie mécanique par rotation d'un arbre à partir de l'énergie obtenue par la combustion d'un hydrocarbure, tel que du gaz ou du fioul. L'énergie mécanique peut être transmise à un alternateur, de manière à alimenter en électricité un réseau électrique. Un disjoncteur est généralement disposé entre l'alternateur et le réseau électrique de manière à isoler l'alternateur du réseau en cas d'incident.

Pour obtenir une meilleure protection de l'environnement, il est souhaitable de contrôler de manière efficace les émissions d'oxydes d'azote causées par les éléments imbrûlés de la combustion.

Une technique connue pour réduire la température de la flamme et limiter ainsi la production d'oxydes d'azote consiste à injecter de l'eau dans le système de combustion de la turbine, tel que décrit par exemple dans les documents US 7,104,070 et EP 1132593.

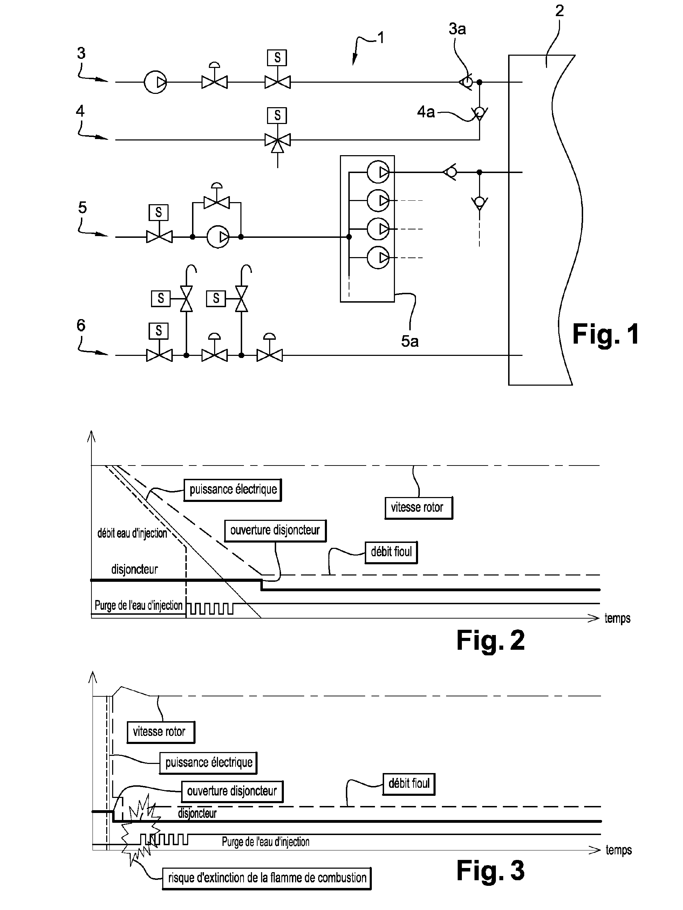

Une turbine équipée d'un tel système d'injection d'eau est représentée schématiquement à la figure 1. La turbine 1 comprend une pluralité de chambres de combustion. Pour plus de clarté, une seule chambre de combustion 2 a été représentée. La chambre de combustion 2 est reliée à un module 3 d'injection d'eau, à un module 5 d'injection de fioul ainsi qu'à un module 6 d'injection de gaz.

Le module 3 d'injection d'eau est relié à un module 4 de purge d'eau muni d'un clapet anti-retour 4a. Le module 4 de purge d'eau envoie de l'air comprimé dans la partie du module 3 d'injection d'eau située entre la chambre de combustion 2 et le clapet anti-retour 3a, de manière à d'évacuer vers la chambre de combustion 2 l'eau résiduelle située dans cette partie.

Le module 3 d'injection d'eau, le module 4 de purge d'eau, le module 5 d'injection de fioul et le module 6 d'injection de gaz comprennent chacun différentes vannes. Le module 3 d'injection d'eau comprend un clapet anti-retour 3a placé à proximité de la chambre de combustion 2. Le module 5 d'injection de fioul comprend un répartiteur 5a de fioul destiné à répartir le fioul entre les différentes chambres de combustion de manière à avoir un débit homogène entre les chambres.

Il est important de maintenir la combustion dans la turbine en veillant à ne pas éteindre la flamme de combustion dans la chambre de combustion.

Lors d'une baisse de charge ou lors d'un arrêt normal de la turbine, la fréquence du rotor est fixée par le réseau électrique, même en cas de diminution du débit de fioul. Tel qu'illustré à la figure 2, le débit de fioul et le débit d'eau d'injection baissent simultanément. La puissance électrique produite par l'alternateur diminue ainsi progressivement jusqu'à devenir nulle, puis on commande l'ouverture du disjoncteur. On veille à ce que le rapport de la quantité de fioul sur la quantité d'eau, dans la chambre de combustion, soit supérieur à une valeur minimale, de manière à ne pas éteindre la flamme de combustion.

Lors de la diminution progressive de la puissance électrique, on commande l'arrêt de l'injection d'eau lorsque la puissance électrique produite par l'alternateur vaut 50% de sa valeur maximale.

On déclenche à cet instant une purge de l'eau résiduelle située entre la chambre de combustion 2 et le clapet anti-retour 3a du module 3 d'injection d'eau. Une fois que la totalité de l'eau résiduelle est envoyée vers la chambre de combustion 2, on maintient un débit d'air comprimé afin d'éviter un retour des gaz de combustion dans le module 3 d'injection d'eau et pour refroidir la canne de l'injecteur.

L'ouverture du disjoncteur est commandée lorsque la puissance électrique est nulle. A cet instant, la totalité de l'eau résiduelle est déjà purgée. Le débit de fioul est maintenu à une valeur constante afin d'obtenir une vitesse nominale de rotation du rotor en l'absence de puissance électrique produite. Le débit de fioul peut également être réduit pour diminuer la vitesse de rotation du rotor jusqu'à zéro, dans le cas d'un arrêt normal.

Ainsi, dans ce cas normal de baisse de puissance électrique, on parvient à contrôler en permanence le ratio fioul/eau, ce qui permet d'éviter une extinction de la flamme de combustion.

Il en va différemment s'il se produit un incident électrique dans le dispositif.

Dans ce cas, tel qu'illustré à la figure 3, le disjoncteur est ouvert dès la détection de l'incident. L'ouverture du disjoncteur entraîne l'isolation de l'alternateur par son découplage. La puissance électrique produite par l'alternateur chute brutalement jusqu'à devenir nulle, ce qui entraîne un transfert d'énergie cinétique supplémentaire au rotor et donc une augmentation de la vitesse du rotor. Pour éviter que la vitesse de rotation du rotor ne dépasse une valeur critique, ce qui endommagerait le rotor, on diminue alors le débit de fioul injecté dans la chambre de combustion. On arrête simultanément le débit d'eau d'injection, puis on commence la purge de l'eau résiduelle. Le débit de fioul est amené à un débit permettant d'obtenir la vitesse nominale de rotation du rotor.

L'ouverture du disjoncteur déclenche la purge de l'eau résiduelle ainsi que la baisse du débit de fioul jusqu'à une valeur constante qui dépend du site et du combustible. Le faible débit de combustible et la quantité importante d'air, associés à la présence d'eau dans la chambre de combustion consécutivement à la purge d'eau, peuvent entraîner un risque important d'extinction de la flamme de combustion.

Afin de pallier cet inconvénient, il a été proposé de rapprocher de la chambre de combustion les clapets anti-retour du module d'injection d'eau et du module de purge d'eau. Cette solution présente toutefois une efficacité limitée, pour des raisons de contraintes de place et d'accessibilité aux tuyauteries proches de la turbine.

Il est également connu de purger l'eau d'injection résiduelle par quantités fractionnées dans le temps, tel qu'illustré à la figure 3, afin de ne pas envoyer trop d'eau à la fois dans la chambre de combustion.

Cette technique n'est toutefois pas satisfaisante, car elle ne permet pas de garantir un maintien de la flamme de combustion, du fait que le volume d'eau reste suffisant pour dégrader la combustion.

L'invention vise à remédier à ces inconvénients.

Elle propose un dispositif permettant de maintenir la combustion lors d'une purge de l'eau d'injection consécutive à une ouverture du disjoncteur, tout en contrôlant la vitesse de rotation du rotor.

L'invention propose également, et de manière plus générale, une turbine à gaz permettant d'assurer le maintien de la combustion lorsque de l'eau est injectée dans la chambre de combustion et que de faibles quantités de fioul sont présentes dans la chambre de combustion, tout en assurant la sécurisation du rotor.

L'invention a ainsi pour objet une turbine à gaz, apte à entraîner en rotation un rotor à partir de l'énergie produite par la combustion d'un combustible dans une chambre de combustion de ladite turbine, la turbine comprenant :

- des moyens d'injection de combustible dans la chambre de combustion,
- des moyens d'injection d'eau dans la chambre de combustion,

Conformément à l'invention, la turbine comprend en outre des moyens de commande aptes à agir sur les moyens d'injection de combustible de manière à ce que la quantité de combustible présente dans la chambre de combustion lors d'une injection d'eau soit :

a) supérieure à une valeur minimale prédéterminée, de manière à maintenir une flamme de combustion dans la chambre de combustion, et
b) inférieure à une valeur maximale prédéterminée, de manière à ce que la vitesse de rotation du rotor soit inférieure à une vitesse maximale prédéterminée.

Les moyens de commande permettent ainsi de s'assurer que la quantité de combustible injectée est suffisamment faible pour éviter une survitesse du rotor, tout en étant suffisamment importante pour éviter une extinction de la flamme de combustion du fait de la présence d'eau.

Le double problème du maintien de la combustion et de la sécurisation du rotor est donc résolu par le réglage spécifique de la quantité de combustible injectée dans la chambre de combustion.

L'invention s'applique avantageusement au cas où les moyens d'injection d'eau comprennent des moyens d'injection d'air aptes à purger, vers la chambre de combustion, de l'eau présente dans un circuit d'injection d'eau relié à la chambre de combustion, c'est-à-dire au cas où l'injection d'eau dans la chambre de combustion résulte de la purge de l'eau résiduelle présente dans le circuit d'injection d'eau.

La valeur minimale de la quantité de combustible peut être prédéterminée en fonction de la quantité d'eau présente dans la chambre de combustion. La valeur minimale prédéterminée peut être réglée par l'homme du métier, par exemple en fonction du combustible. Pour un maintien efficace de la flamme de combustion dans le cas où le combustible est du fioul, le rapport en masse eau/fioul est avantageusement compris entre 1 et 1,3.

Les moyens d'injection d'eau sont de préférence aptes à injecter de l'eau pendant des périodes d'injection d'eau prédéterminées, de manière à mieux répartir dans le temps la quantité d'eau présente dans la chambre de combustion.

Les moyens de commande peuvent être aptes à faire passer la quantité de combustible injectée d'une valeur inférieure à une valeur supérieure, pendant des intervalles de temps commençant entre une première période d'injection d'eau et une deuxième période d'injection d'eau consécutive à la première période, et s'achevant au début de la deuxième période d'injection d'eau. On peut ainsi atteindre la quantité souhaitée de combustible dans la chambre de combustion dès le début de l'injection d'eau.

Les moyens de commande sont de préférence aptes à faire passer la quantité de combustible injectée d'une valeur supérieure à une valeur inférieure, pendant des intervalles de temps commençant à la fin d'une période d'injection d'eau et s'achevant avant le début de la période d'injection d'eau suivante. Cette diminution de la quantité de combustible permet de diminuer la vitesse du rotor qui avait augmenté durant la période d'injection d'eau.

Les moyens de commande peuvent également être aptes à faire diminuer la quantité de combustible injectée entre le début et la fin des périodes d'injection d'eau, de manière à faciliter la baisse de la vitesse du rotor.

Le combustible peut comprendre du gaz et/ou un combustible liquide.

L'invention a également pour objet un dispositif de production d'électricité comprenant :

- une turbine à gaz apte à entraîner en rotation un rotor à partir de l'énergie produite par la combustion d'un combustible dans une chambre de combustion de ladite turbine, la turbine comprenant des moyens d'injection de combustible dans la chambre de combustion, un circuit d'injection d'eau relié à la chambre de combustion, et des moyens d'injection d'air aptes à purger vers la chambre de combustion de l'eau présente dans le circuit d'injection d'eau,

- un alternateur relié à la turbine et couplé à un réseau électrique via un disjoncteur apte à isoler l'alternateur du réseau.

Le dispositif selon l'invention comprend en outre des moyens de commande aptes à commander, consécutivement à un isolement de l'alternateur par le disjoncteur et à un arrêt de l'injection d'eau via le circuit d'injection d'eau, une ou plusieurs purges de l'eau résiduelle présente dans le circuit d'injection d'eau à l'aide des moyens d'injection d'air, les moyens de commande étant en outre aptes à contrôler la quantité de combustible injectée de manière à ce que la quantité de combustible présente dans la chambre de combustion lors de chaque purge d'eau soit :

a) supérieure à une valeur minimale prédéterminée, de manière à maintenir une flamme de combustion dans la chambre de combustion, et
b) inférieure à une valeur maximale prédéterminée, de manière à ce que la vitesse de rotation du rotor soit inférieure à une vitesse maximale prédéterminée.

D'autres caractéristiques et avantages de la présente invention apparaîtront plus clairement à la lecture de la description suivante, donnée à titre d'exemple illustratif et non limitatif, et faite en référence aux dessins annexés sur lesquels :

- la figure 1, déjà décrite, illustre schématiquement une partie d'une turbine munie d'un circuit d'injection d'eau,
- les figures 2 et 3, déjà décrites, sont des diagrammes illustrant différentes situations de baisse de puissance électrique fournie par un alternateur couplé à la turbine, et
- les figures 4 et 5 sont des diagrammes utiles à la compréhension de l'invention.

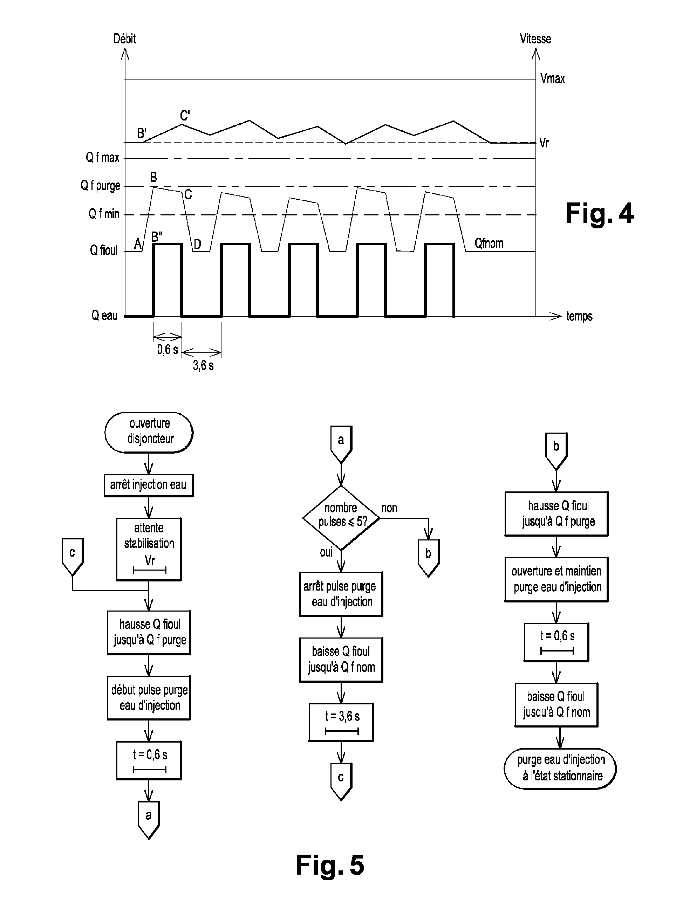

La figure 4, en liaison avec la figure 5, permet d'expliquer un mode de fonctionnement d'un dispositif de production d'électricité selon l'invention en cas d'incident électrique. La figure 4 montre l'évolution en fonction du temps du débit de purge d'eau d'injection $Q_{eau}$, du débit de fioul $Q_{fioul}$, du débit minimum autorisé de fioul $Q_{fmin}$, du débit maximum autorisé de fioul $Q_{fmax}$, du débit de fioul pendant les purges d'eau $Q_{fpurge}$, de la vitesse de rotation $V_r$ du rotor de la turbine, et de la vitesse maximale autorisée $V_{max}$ du rotor.

Le diagramme de la figure 4 débute lors de l'ouverture du disjoncteur, suite à un incident électrique dans l'alternateur ou dans la turbine, après arrêt de l'injection d'eau dans le circuit d'injection et stabilisation de la vitesse du rotor à sa vitesse nominale, tel qu'illustré à la figure 3.

Le débit de purge $Q_{eau}$ de l'eau résiduelle présente dans le circuit d'injection d'eau est fractionné par périodes appelées pulses de débit, ce qui permet de ne pas envoyer en une seule fois toute l'eau résiduelle dans la chambre de combustion. Les pulses de débit peuvent par exemple avoir une durée de 0,6 s, et être espacés d'un intervalle de temps de 3,6 s. Le débit d'eau par pulse est idéalement estimé comme étant le volume résiduel d'eau total divisé par le nombre de pulses. En pratique, il se peut que le premier pulse d'eau constitue une partie importante de l'eau résiduelle et que les quantités d'eau purgées lors des pulses suivants soient plus faibles.

La valeur du débit de fioul $Q_{fioul}$ est initialement la valeur de débit de fuel $Q_{fnom}$ permettant d'atteindre la vitesse nominale de rotation du rotor de la turbine en l'absence de puissance électrique fournie. Cette valeur est toutefois insuffisante pour assurer le maintien de la flamme de combustion lorsque de l'eau de purge est injectée dans la chambre de combustion. Il faut ainsi que le débit de fioul soit supérieur à une valeur minimale $Q_{fmin}$ pour maintenir la flamme lorsque commence la purge d'eau. La valeur minimale $Q_{fmin}$ est prédéterminée. Elle est par exemple déterminée de façon à ce que la quantité d'eau dans la chambre de combustion consécutivement à la purge soit égale à $1/R_p$ fois la quantité de fioul, Rp désignant un rapport prédéterminé. Ainsi $Q_{fmin} = Qeau* R_p$.

Le débit de fioul $Q_{fioul}$ lors des pulses de purge doit en outre être inférieur à une valeur $Q_{fmax}$ qui entraîne immédiatement une survitesse du rotor. Par exemple, pour une vitesse de rotation nominale du rotor de 3000 tours/min, correspondant à une fréquence de l'alternateur de 50 Hz, la vitesse maximale autorisée du rotor est de 3300 tours/min. Au-delà de cette vitesse, on risque une détérioration importante du rotor.

Le débit de fioul lors des purges est ainsi réglé à une valeur $Q_{fpurge}$ comprise entre $Q_{fmin}$ et $Q_{fmax}$.

La valeur $Q_{fpurge}$ est par exemple fixée à mi-chemin entre $Q_{fmin}$ et $Q_{fmax}$. Dans ce cas, $Q_{fpurge}$ obéit à la relation :

$$Q_{fpurge} = (Q_{fmax} + Q_{eau*}R_p)/2.$$

Une fois que le débit de fioul a atteint la valeur $Q_{fpurge}$, on commence la purge de l'eau d'injection.

Tel qu'illustré à la figure 4, le premier pulse du débit de fioul $Q_{fioul}$ comprend quatre points A, B, C et D. Le point A correspond au début de l'augmentation du débit de fioul $Q_{fioul}$. Le débit $Q_{fioul}$ est stabilisé au point B, puis est diminué à partir du point C, pour être stabilisé à la valeur $Q_{fnom}$ au point D. La vitesse $V_r$ du rotor comprend une période B'-C' d'augmentation de vitesse lors du premier pulse de débit de fioul $Q_{fioul}$.

Ainsi, la vitesse $V_r$ du rotor commence à augmenter à partir de B' et continue à augmenter jusqu'en C', même si le débit de fioul $Q_{fioul}$ diminue entre B et C. L'accélération totale du rotor dépend alors de la durée d'augmentation du débit de fioul $Q_{fioul}$ entre A et B.

En effet, une augmentation du débit de fioul ne génère pas forcément une augmentation immédiate de la vitesse du rotor. De même, la réduction du débit de fioul après une augmentation de ce dernier n'a pas un impact immédiat sur la vitesse du rotor. Ainsi, la réponse de la vitesse du rotor n'est pas une fonction linéaire de l'ouverture des vannes de régulation de débit de fioul, car l'accélération initiale dépend de l'augmentation de la quantité de fioul et de la durée de celle-ci.

Pour tenir compte de cette inertie du rotor, le débit de fioul $Q_{fioul}$ est diminué dès le démarrage des pulses de purge d'injection d'eau en B". Le débit de fioul $Q_{fioul}$ suit ensuite une diminution plus importante lors de l'arrêt de la purge jusqu'à atteindre la valeur $Q_{fnom}$.

On choisit de préférence un nombre limité de pulses, par exemple cinq, afin de ne pas endommager la membrane de la vanne de régulation de débit de fioul.

Tant que le nombre de pulses est inférieur à cinq, le procédé se poursuit par la stabilisation du débit de fioul $Q_{fioul}$ à la valeur $Q_{fnom}$. Puis $Q_{fioul}$ est à nouveau augmenté jusqu'à atteindre la valeur $Q_{fpurge}$ au moment du début de la purge d'eau suivante.

A la fin de la dernière purge, le débit $Q_{fioul}$ est maintenu à la valeur $Q_{fnom}$. La purge est alors maintenue dans un état stationnaire, c'est-à-dire qu'un débit d'air comprimé est conservé afin d'assurer le refroidissement de l'injecteur et d'empêcher tout retour des gaz de combustion dans le circuit d'injection d'eau.

On s'assurera pendant le procédé que le débit $Q_{fpurge}$ n'entraîne pas une vitesse du rotor supérieure à la vitesse maximale autorisée (voir la partie B'-C' de la vitesse $V_r$ du rotor). Sinon, la valeur de $Q_{fpurge}$ sera diminuée.

La présente invention n'est pas limitée au mode de réalisation qui vient d'être décrit et porte dans sa généralité à tous les dispositifs de production d'électricité et à toutes les turbines envisageables à partir des indications générales fournies dans l'exposé de l'invention. On peut notamment envisager d'autres types de périodes de purge d'eau et de variation de débit de fioul en fonction du temps.

**Revendications**

1. Turbine à gaz (1), apte à entraîner en rotation un rotor à partir de l'énergie produite par la combustion d'un combustible dans une chambre de combustion (2) de ladite turbine (1), la turbine (1) comprenant :

   - des moyens (5,6) d'injection de combustible dans la chambre de combustion (2),
   - des moyens (3,4) d'injection d'eau dans la chambre de combustion (2),

**caractérisée en ce que** la turbine (1) comprend en outre des moyens de commande aptes à agir sur les moyens d'injection (5,6) de combustible de manière à ce que la quantité de combustible présente dans la chambre de combustion (2) lors d'une injection d'eau soit :

   a) supérieure à une valeur minimale prédéterminée, de manière à maintenir une flamme de combustion dans la chambre de combustion (2), et
   b) inférieure à une valeur maximale prédéterminée, de manière à ce que la vitesse de rotation du rotor soit inférieure à une vitesse maximale prédéterminée.

2. Turbine (1) selon la revendication 1, **caractérisée en ce que** les moyens (3,4) d'injection d'eau comprennent des moyens (4) d'injection d'air aptes à purger vers la chambre de combustion (2) de l'eau présente dans un circuit d'injection d'eau (3) relié à la chambre de combustion (2).

3. Turbine (1) selon la revendication 1 ou 2, **caractérisée en ce que** la valeur minimale de la quantité de combustible est prédéterminée en fonction de la quantité d'eau présente dans la chambre de combustion (2).

4. Turbine (1) selon l'une des revendications 1 à 3, **caractérisée en ce que** les moyens (3,4) d'injection d'eau sont aptes à injecter de l'eau pendant des périodes d'injection d'eau prédéterminées.

5. Turbine (1) selon la revendication 4, **caractérisée en ce que** les moyens de commande sont aptes à faire passer la quantité de combustible injectée d'une valeur inférieure à une valeur supérieure, pendant des intervalles de temps commençant entre une première période d'injection d'eau et une deuxième période d'injection d'eau consécutive à la première période, et s'achevant au début de la deuxième période d'injection d'eau.

6. Turbine (1) selon la revendication 4 ou 5, **caractérisée en ce que** les moyens de commande sont aptes à faire passer la quantité de combustible injectée d'une valeur supérieure à une valeur inférieure, pendant des intervalles de temps commençant à la fin d'une période d'injection d'eau et s'achevant avant le début de la période d'injection d'eau suivante.

7. Turbine (1) selon l'une des revendications 4 à 6, **caractérisée en ce que** les moyens de commande sont aptes à faire diminuer la quantité de combustible injectée entre le début et la fin des périodes d'injection d'eau.

**8.** Turbine (1) selon l'une des revendications 1 à 7, **caractérisée en ce que** le combustible comprend du gaz et/ou un combustible liquide.

**9.** Dispositif de production d'électricité comprenant :

- une turbine à gaz (1) apte à entraîner en rotation un rotor à partir de l'énergie produite par la combustion d'un combustible dans une chambre de combustion (2) de ladite turbine (1), la turbine (1) comprenant des moyens (5,6) d'injection de combustible dans la chambre de combustion, un circuit d'injection d'eau (3) relié à la chambre de combustion (2), et des moyens (4) d'injection d'air aptes à purger vers la chambre de combustion (2) de l'eau présente dans le circuit d'injection d'eau (3),
- un alternateur relié à la turbine (1) et couplé à un réseau électrique via un disjoncteur apte à isoler l'alternateur du réseau,

le dispositif étant **caractérisé en ce qu'**il comprend en outre des moyens de commande aptes à commander, consécutivement à un isolement de l'alternateur par le disjoncteur et à un arrêt de l'injection d'eau via le circuit d'injection d'eau (3), une ou plusieurs purges de l'eau résiduelle présente dans le circuit d'injection d'eau (3) à l'aide des moyens (4) d'injection d'air, les moyens de commande étant en outre aptes à contrôler la quantité de combustible injectée de manière à ce que la quantité de combustible présente dans la chambre de combustion (2) lors de chaque purge d'eau soit :

a) supérieure à une valeur minimale prédéterminée, de manière à maintenir une flamme de combustion dans la chambre de combustion (2), et
b) inférieure à une valeur maximale prédéterminée, de manière à ce que la vitesse de rotation du rotor soit inférieure à une vitesse maximale prédéterminée.

**Revendications modifiées conformément à la règle 137(2) CBE.**

**1.** Turbine à gaz (1), apte à entraîner en rotation un rotor à partir de l'énergie produite par la combustion d'un combustible dans une chambre de combustion (2) de ladite turbine (1), la turbine (1) comprenant :

- des moyens (5,6) d'injection de combustible dans la chambre de combustion (2), aptes à injecter de l'eau pendant des périodes d'injection d'eau prédéterminées,
- des moyens (3,4) d'injection d'eau dans la chambre de combustion (2),

**caractérisée en ce que** la turbine (1) comprend en outre des moyens de commande aptes à agir sur les moyens d'injection (5,6) de combustible de manière à ce que la quantité de combustible présente dans la chambre de combustion (2) lors d'une injection d'eau soit :

a) supérieure à une valeur minimale prédéterminée, de manière à maintenir une flamme de combustion dans la chambre de combustion (2), et
b) inférieure à une valeur maximale prédéterminée, de manière à ce que la vitesse de rotation du rotor soit inférieure à une vitesse maximale prédéterminée,

et **en ce que** les moyens de commande sont aptes à faire passer la quantité de combustible injectée i) d'une valeur inférieure à une valeur supérieure, pendant des intervalles de temps commençant entre une première période d'injection d'eau et une deuxième période d'injection d'eau consécutive à la première période, et s'achevant au début de la deuxième période d'injection d'eau, et/ou ii) d'une valeur supérieure à une valeur inférieure, pendant des intervalles de temps commençant à la fin d'une période d'injection d'eau et s'achevant avant le début de la période d'injection d'eau suivante.

**2.** Turbine (1) selon la revendication 1, **caractérisée en ce que** les moyens (3,4) d'injection d'eau comprennent des moyens (4) d'injection d'air aptes à purger vers la chambre de combustion (2) de l'eau présente dans un circuit d'injection d'eau (3) relié à la chambre de combustion (2).

**3.** Turbine (1) selon la revendication 1 ou 2, **caractérisée en ce que** la valeur minimale prédéterminée de la quantité de combustible est fonction de la quantité d'eau présente dans la chambre de combustion (2).

**4.** Turbine (1) selon l'une des revendications 1 à 3, **caractérisée en ce que** les moyens de commande sont aptes à faire diminuer la quantité de combustible injectée entre le début et la fin des périodes d'injection d'eau.

**5.** Turbine (1) selon l'une des revendications 1 à 4, **caractérisée en ce que** le combustible comprend du gaz et/ou un combustible liquide.

**6.** Dispositif de production d'électricité, **caractérisé en ce qu'**il comprend :

- une turbine à gaz (1) selon l'une des revendications 2 à 5,
- un alternateur relié à la turbine (1) et couplé à un réseau électrique via un disjoncteur apte à isoler l'alternateur du réseau,

les moyens de commande de la turbine (1) étant aptes à commander, consécutivement à un isolement de l'alternateur par le disjoncteur et à un arrêt de l'injection d'eau via le circuit d'injection d'eau (3), une ou plusieurs purges de l'eau résiduelle présente dans le circuit d'injection d'eau (3) à l'aide des moyens (4) d'injection d'air.

EP 2 441 936 A1

Fig. 1

puissance électrique

vitesse rotor

ouverture disjoncteur

débit fioul

débit eau d'injection

disjoncteur

Purge de l'eau d'injection

temps

Fig. 2

vitesse rotor

puissance électrique

ouverture disjoncteur

débit fioul

disjoncteur

Purge de l'eau d'injection

temps

risque d'extinction de la flamme de combustion

Fig. 3

8

EP 2 441 936 A1

**Fig. 4**

**Fig. 5**

Europäisches
Patentamt

European
Patent Office

Office européen
des brevets

**RAPPORT DE RECHERCHE EUROPEENNE**

Numéro de la demande

EP 10 18 7276

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 540 045 A (CORBETT NICHOLAS C [GB] ET AL) 30 juillet 1996 (1996-07-30) * abrégé * * colonne 5, ligne 36 - ligne 44 * * colonne 7, ligne 14 - ligne 20 * * figure 3 * ----- | 1-9 | INV. F02C3/30 |
| X | US 6 526 742 B1 (AUSSERWOGER GOTTFRIED [AT] ET AL) 4 mars 2003 (2003-03-04) * colonne 3, ligne 35 - ligne 36 * * colonne 4, ligne 27 - ligne 29 * * colonne 5, ligne 10 - ligne 25 * * figure 3 * ----- | 1-9 | |
| X | EP 1 806 490 A2 (GEN ELECTRIC [US]) 11 juillet 2007 (2007-07-11) * alinéa [0010] * * alinéa [0005] * * alinéa [0020] * * figure 2 * ----- | 1-9 | |
| X | US 2007/089425 A1 (MOTTER ERIC [US] ET AL MOTTER ERIC [US] ET AL) 26 avril 2007 (2007-04-26) * alinéa [0022] * * alinéa [0033] * * alinéa [0038] * ----- | 1-9 | DOMAINES TECHNIQUES RECHERCHES (IPC) F02C |
| X | EP 0 949 454 A2 (GEN ELECTRIC [US]) 13 octobre 1999 (1999-10-13) * alinéa [0022] - alinéa [0029] * * figure 2 * ----- | 1-9 | |
| X | US 5 784 875 A (STATLER WILLIAM O [US]) 28 juillet 1998 (1998-07-28) * colonne 4 * * figure 4 * ----- | 1-9 | |

Le présent rapport a été établi pour toutes les revendications

| Lieu de la recherche | Date d'achèvement de la recherche | Examinateur |
|---|---|---|
| La Haye | 30 mars 2011 | Burattini, Paolo |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

    ................................................................
& : membre de la même famille, document correspondant

EPO FORM 1503 03.82 (P04C02)

**EP 2 441 936 A1**

**ANNEXE AU RAPPORT DE RECHERCHE EUROPEENNE
RELATIF A LA DEMANDE DE BREVET EUROPEEN NO.**  EP 10 18 7276

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-03-2011

| Document brevet cité au rapport de recherche | | Date de publication | Membre(s) de la famille de brevet(s) | | Date de publication |
|---|---|---|---|---|---|
| US 5540045 | A | 30-07-1996 | AUCUN | | |
| US 6526742 | B1 | 04-03-2003 | AT | 408787 B | 25-03-2002 |
| | | | WO | 9963209 A1 | 09-12-1999 |
| | | | AU | 4022399 A | 20-12-1999 |
| | | | DE | 59902200 D1 | 05-09-2002 |
| | | | EP | 1084337 A1 | 21-03-2001 |
| EP 1806490 | A2 | 11-07-2007 | JP | 2007182889 A | 19-07-2007 |
| | | | US | 2007151253 A1 | 05-07-2007 |
| | | | US | 2011023974 A1 | 03-02-2011 |
| US 2007089425 | A1 | 26-04-2007 | AUCUN | | |
| EP 0949454 | A2 | 13-10-1999 | CZ | 9901224 A3 | 17-11-1999 |
| | | | DE | 69901043 D1 | 25-04-2002 |
| | | | DE | 69901043 T2 | 24-10-2002 |
| | | | JP | 11324715 A | 26-11-1999 |
| | | | TW | 382053 B | 11-02-2000 |
| | | | US | 6145294 A | 14-11-2000 |
| US 5784875 | A | 28-07-1998 | AUCUN | | |

EPO FORM P0460

Pour tout renseignement concernant cette annexe : voir Journal Officiel de l'Office européen des brevets, No.12/82

11

**EP 2 441 936 A1**

## RÉFÉRENCES CITÉES DANS LA DESCRIPTION

**Documents brevets cités dans la description**

- US 7104070 B

- EP 1132593 A